# EUROPEAN PATENT SPECIFICATION

(11) **EP 4 212 770 B1**
(45) Date of publication and mention of the grant of the patent: **31.12.2025**
(21) Application number: 22205826.5
(22) Date of filing: 07.11.2022
(51) Int. Cl.: F21V 8/00

(54) **AN ULTRA-THIN SURFACE LIGHT SOURCE STRUCTURE AND AN AUTOMOBILE INTERIOR COMPRISING THE SAME**
LICHTQUELLENSTRUKTUR MIT ULTRADÜNNER OBERFLÄCHE UND AUTOMOBILINNENRAUM DAMIT
STRUCTURE DE SOURCE LUMINEUSE DE SURFACE ULTRA-MINCE ET INTÉRIEUR DE VÉHICULE AUTOMOBILE LA COMPRENANT

(30) Priority: 09.11.2021 CN 202111322858
(43) Date of publication of application: 19.07.2023
(73) Proprietor: Faurecia Automotive Interior System (Shanghai) Co., Ltd., Shanghai 201109 (CN)
(72) Inventor: WANG, Huidong, Shanghai, 201100 (CN)
(74) Representative: Pfenning, Meinig & Partner mbB

(56) References cited:
- CN-B- 103 218 051
- CN-B- 106 773 315
- CN-U- 205 002 048
- US-A1- 2011 051 397
- US-A1- 2012 013 811
- US-A1- 2016 349 436

## Description

The present invention relates to an ultra-thin surface light source structure.

In the prior art, traditional lighting components cannot be integrated in many areas with limited structural space in an automotive interior, so it is impossible to achieve translucent or glowing effects on the surface of the automotive interior in these areas, such as ambient lights or luminous patterns and symbols for indicating functions, etc.

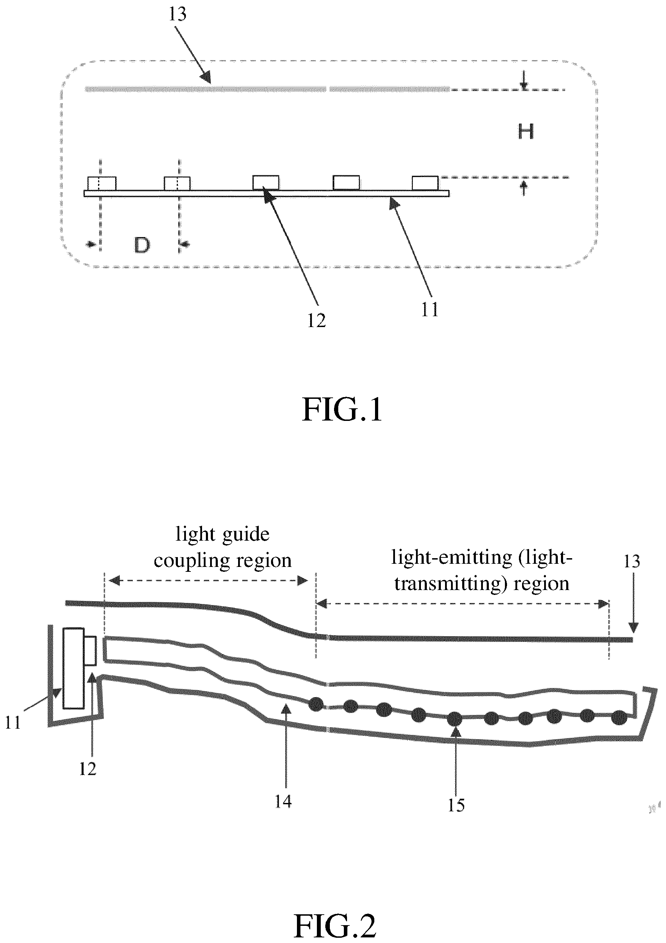

Fig. 1 is a schematic diagram of a light source structure, using a LED array to achieve a surface light source, in the prior art. Fig. 2 is a schematic diagram of a light source structure, using a traditional light guide proposal to achieve a surface light source, in the prior art.

As shown in Figs. 1 and 2, the light source structure comprises a printed circuit board 11 and LED light sources 12. The LED light sources 12 are installed on the printed circuit board 11 at intervals. A distance between two adjacent LED light sources 12 is D. A height of a cavity from the LED light sources 12 to a light-transmitting surface 13 is H. The LED light sources 12 illuminate a light guide section 14 to form a light guide coupling region, and an optical mechanism 15 forms a light-emitting (light-transmitting) region.

Therefore, traditional proposals usually have the following problems.
1. Traditional proposals generally comprise separate circuit boards, light guides and brackets, and reflective films and uniform films, etc. may exist.
2. In traditional proposals, light guides cannot be standardized, so that for different applications, it needs to design corresponding light guides individually.
3. In traditional proposals, light guide parts are individual mould injection parts. Since different applications correspond to different optical patterns or optical surfaces of light guides, each light guide must correspond to an individual light guide mould.
4. A light guide in another traditional proposal is obtained by laser-cutting a transparent material plate of a specific shape and then laser-engraving optical patterns on its surface, but this kind of proposal is only limited to a completely flat light guide. At the same time, it is still used as individual parts for assembly, and its unit price is much higher than the unit price of mould injection parts.
5. Circuit boards of the LEDs are soldered individually, requiring separate assembly space and assembly structure design.
6. Light guides require a segment of coupling region. For monochromatic LED light sources, the length of the segment of coupling region is generally greater than 10mm. For RGB LED light sources, the length of the segment of coupling region is generally greater than 20mm.

In view of this, the inventor of the present application designs an ultra-thin surface light source structure to overcome the above-mentioned technical problems.

US 2011/051397 A1 relates to an optical assembly, a backlight unit, and a display apparatus thereof.

CN 205002048 U relates to a light guiding structure and a backlight module which are directly combined with a light source.

CN 103 218 051 B relates to a keyboard that prevents light leakage.

The technical problems to be solved by the present invention are to provide an ultra-thin surface light source structure and an automobile interior comprising it to overcome defects of surface light source structure in the prior art.

The present invention solves the above-mentioned technical problems through the following technical proposals.

An ultra-thin surface light source structure, which is featured in that the ultra-thin surface light source structure comprises a light guide substrate layer, a circuit film and a reflective film, the circuit film is printed on bottom of the light guide substrate layer, the reflective film is printed on an upper part of the light guide substrate layer, a plurality of LED light sources are arranged at intervals in the light guide substrate layer, and a plurality of reflective dots are arranged at intervals in the reflective film.

According to an embodiment of the prevent invention, the ultra-thin surface light source structure further comprises a light shield layer, and the light shield layer is printed on bottom of the circuit film.

According to an embodiment of the prevent invention, a substrate of the reflective film is made by transparent PET or PC, and the reflective film is printed with white ink on whole surface.

According to an embodiment of the prevent invention, the reflective dots are printed on a lower part or an upper part of the reflective film by screen printing.

The positive progressive effects of the present invention are described as following.

An ultra-thin surface light source structure of the present invention and an automobile interior comprising it have the following many advantages.
1. The ultra-thin surface light source structure has no separate LED circuit board parts, light guide parts, reflective brackets or reflective films, etc., which greatly saves manufacturing cost of components, assemblies and assembly production process.
2. The ultra-thin surface light source is produced by mould injection to complete production of a standard surface light source, and can be cut according to a required shape. At the same time, a certain degree of bending is allowed, that is, using standardized products adapt to flexible designs and assembly requirements.
3. The mould of the ultra-thin surface light source is a standardized mould. For different applications, it just needs to replace reflective films (optical pattern films) for in-film injection moulding to produce a surface light source assembly for a certain application.

The above and other features, properties and advantages of the present invention will become more apparent from the following description in conjunction with the drawings and embodiments. In the drawings, the same reference numerals always represent the same features, wherein:
Fig. 1 is a schematic diagram of a light source structure, using a LED array to achieve a surface light source, in the prior art.
Fig. 2 is a schematic diagram of a light source structure, using a conventional light guide proposal to achieve a surface light source, in the prior art.
Fig. 3 is a structural diagram of an ultra-thin surface light source structure according to the embodiment 1 of the present invention.
Fig. 4 is a structural diagram of an ultra-thin surface light source structure according to the embodiment 2 not forming part of of the present invention.
Fig. 5 is a structural diagram of an ultra-thin surface light source structure according to the embodiment 3 of the present invention.
Fig. 6 is a structural diagram of an ultra-thin surface light source structure according to the embodiment 4 of the present invention.
Fig. 7 is a structural diagram of an ultra-thin surface light source structure according to the embodiment 5 of the present invention.
Fig. 8 is a structural diagram of an ultra-thin surface light source structure according to the embodiment 6 of the present invention.

### Reference numerals

| | |
|---|---|
| Printed circuit board | 11 |
| LED light source | 12, 40 |
| Light-transmitting surface | 13 |
| Light guide section | 14 |
| Optical mechanism | 15 |
| Light guide substrate layer | 10 |
| Circuit film | 20 |
| Reflective film | 30 |
| Reflective dot | 50 |
| Light shield layer | 60 |
| Optical microstructure film | 100 |
| Reflective material layer | 200 |
| Optical microstructure | 110 |
| PVD coated diaphragm | 70 |
| Transparent substrate layer | 80 |
| Optical film | 300 |
| Upper optical film | 310 |
| Side optical film | 320 |
| Decorative layer | 61 |
| Silver nanowire | 400 |
| Substrate layer of PET or PC film | 500 |
| LSR soft material layer | 600 |
| Leather | 700 |
| Gap | A |
| White bracket | 90 |

In order to make above objects, features and advantages of the present invention more clearly understood, the specific embodiments of the present invention will be described in detail below with reference to the accompanying drawings.

Embodiments of the present invention will now be described in detail with reference to the accompanying drawings. Preferred embodiments of the present invention will now be referred in detail, examples of which are illustrated in the accompanying drawings. Wherever possible, the same reference numerals will be used to represent the same or similar parts in all drawings.

In addition, although the terms used in the present invention are selected from well-known and common terms, some terms mentioned in the specification of the present invention may be selected by the applicant according to his or her judgment, and its detailed meanings are explained in the relevant part of the description of this disclosure.

Furthermore, the present invention should be understood not only by the actual terms used, but also by the meanings implied by each term.

### Embodiment 1:

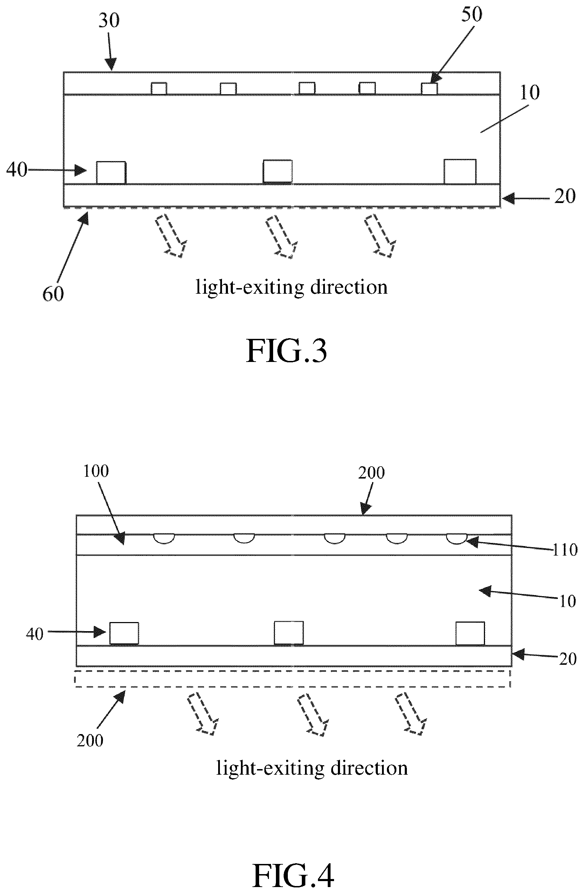

Fig. 3 is a structural diagram of an ultra-thin surface light source structure according to the embodiment 1 of the present invention.

As shown in Fig.3, the present invention discloses an ultra-thin surface light source structure, which comprises a light guide substrate layer 10, a circuit film 20 and a reflective film 30. The circuit film 20 is printed on bottom of the light guide substrate layer 10. The reflective film 30 is printed on an upper part of the light guide substrate layer 10. A plurality of LED light sources 40 are arranged at intervals in the light guide substrate layer 10. A plurality of reflective dots 50 are arranged at intervals in the reflective film 30.

Further, the ultra-thin surface light source structure also comprises a light shield layer 60, and the light shield layer 60 is printed on bottom of the circuit film 20.

Preferably, a substrate of the reflective film 30 is made by transparent PET (thermoplastic polyester) or PC (polycarbonate), and made the entire diaphragm be a reflective film by printing white ink on whole surface. The reflective dots 50 are printed on a lower part or an upper part of the reflective film 30 by screen printing. By printing high-reflectivity dots through screen printing, the uniformity of brightness of the overall surface light source is further controlled, or specific brightness distribution requirements are further achieved.

LED light sources 40 on the circuit film 20 is preferably pre-soldered. The electronic circuit is achieved by printing conductive ink. There are metal pins reserved for electrical connection on the edge of the circuit film 20.

Optionally, one side of the circuit film 20 corresponds to process and function, and the other side is the light shield layer 60 printed by white ink. The light transmittance of the light shield layer 60 is controlled by the type of ink and the thickness of ink to optimize the bright region of the area near the LED light sources 40.

In this embodiment, preferably, LED light sources 40 can preferably be TOPLEDs (top-emitting LEDs), SIDELEDs (side-emitting LEDs), white LEDs with optionally specified colour coordinate range, monochromatic LEDs with optionally specified wavelength range or RGB LEDs (red, green and blue LEDs). Optionally, each LED unit is composed of a group of multiple LEDs. For example, three LEDs of red, green and blue may form a LED unit. For another example, a warm white LED and a cold white LED may also form a LED unit. Otherwise, any combination of two or more LEDs of orange light, red light, ice blue, green light and white light may also form a LED unit.

The light guide material in the light guide substrate layer 10 can be selected from PMMA (acrylic), PC (polycarbonate) or Silicone (silica gel). Among them, the surface light source achieved by PMMA (acrylic) and PC (polycarbonate) is hard, and the surface light source achieved by silica gel is soft.

An ultra-thin surface light source structure in this embodiment is based on the mould injection production process of in-moulding electronics (IME), wherein a light guide substrate layer, a circuit film and a reflective film are co-injected in a mould to form a one-piece and highly integrated ultra-thin surface light source, which replaces the reflective film to flexibly respond to different optical design needs.

### Embodiment 2:

Fig. 4 is a structural diagram of an ultra-thin surface light source structure according to the embodiment 2 not forming part of the present invention.

As shown in Fig.4, the structure of this embodiment is basically the same as that of embodiment 1, while the difference is that the present invention discloses an ultra-thin surface light source structure, comprising a light guide substrate layer 10, a circuit film 20, an optical microstructure film 100 and a reflective material layer 200, wherein the circuit film 20 is printed on bottom of the light guide substrate layer 10, the optical microstructure film 100 is printed on an upper part of the light guide substrate layer 10, and the reflective material layer 200 is printed on an upper part of the optical microstructure film 100 or printed on bottom of the circuit film 20. A plurality of LED light sources 40 are arranged at intervals in the light guide substrate layer 10, and a plurality of optical microstructures 110 are arranged at intervals in the optical microstructure film 100.

Wherein, when the reflective material layer 200 is printed on an upper part of the optical microstructure film 100, light is emitted from bottom of the circuit film 20. Alternatively, the ultra-thin surface light source structure further comprises a light shield layer 60, and the light shield layer 60 is printed on bottom of the circuit film 20. Alternatively, when the reflective material layer 200 is printed on bottom of the circuit film 20, for example, assuming that the reflective material layer 200 uses a white reflective material (or a white reflective ink layer), light-exiting direction is on the opposite side.

Preferably, the optical microstructure 110 adopts a three-dimensional structure, and is arranged on an upper part or a lower part of the optical microstructure film 100 by laser engraving or photolithography.

Herein, a substrate of the optical microstructure film 100 is preferably transparent PET, PC, etc., which makes optical microstructures distribute according to certain rules, change size according to design rules and distribute on the entire surface of the diaphragm, through laser carving or photolithography. The optical microstructure film 100 controls the uniformity of brightness of the overall surface light source or achieves specific brightness distribution requirements.

LED light sources 40 on the circuit film 20 is preferably pre-soldered. The electronic circuit is achieved by printing conductive ink. There are metal pins reserved for electrical connection on the edge of the circuit film 20.

Optionally, one side of the circuit film 20 corresponds to process and function, and the other side is the light shield layer 60 printed with white ink. The light transmittance of the light shield layer 60 is controlled by the type of ink and the thickness of ink to optimize the bright region of the area near the LED light sources 40.

In this embodiment, preferably, LED light sources 40 can preferably be TOPLEDs (top-emitting LEDs), SIDELEDs (side-emitting LEDs), white LEDs with optionally specified colour coordinate range, monochromatic LEDs with optionally specified wavelength range or RGB LEDs (red, green and blue LEDs). Optionally, each LED unit is composed of a group of multiple LEDs. For example, three LEDs of red, green and blue may form a LED unit. For another example, a warm white LED and a cold white LED may also form a LED unit. Otherwise, any combination of two or more LEDs of orange light, red light, ice blue, green light and white light may also form a LED unit.

The light guide material in the light guide substrate layer 10 can be selected from PMMA (acrylic), PC (polycarbonate), or Silicone (silica gel). Among them, the surface light source achieved by PMMA (acrylic) and PC (polycarbonate) is hard, and the surface light source achieved by silica gel is soft.

An ultra-thin surface light source structure in this embodiment is based on the mould injection production process of in-moulding electronics (IME), wherein a light guide substrate layer, a circuit film, a microstructure film, and white reflective material are co-injected in a mould to form a one-piece and highly integrated ultra-thin surface light source, which replaces the microstructure film to flexibly respond to different optical design needs.

The ultra-thin surface light source structure described in this embodiment adopts two-colour injection moulding. Optionally, no white reflective material is used, while one side of the circuit film is a reflective layer printed with white ink, and the injection moulding is monochrome injection moulding.

### Embodiment 3:

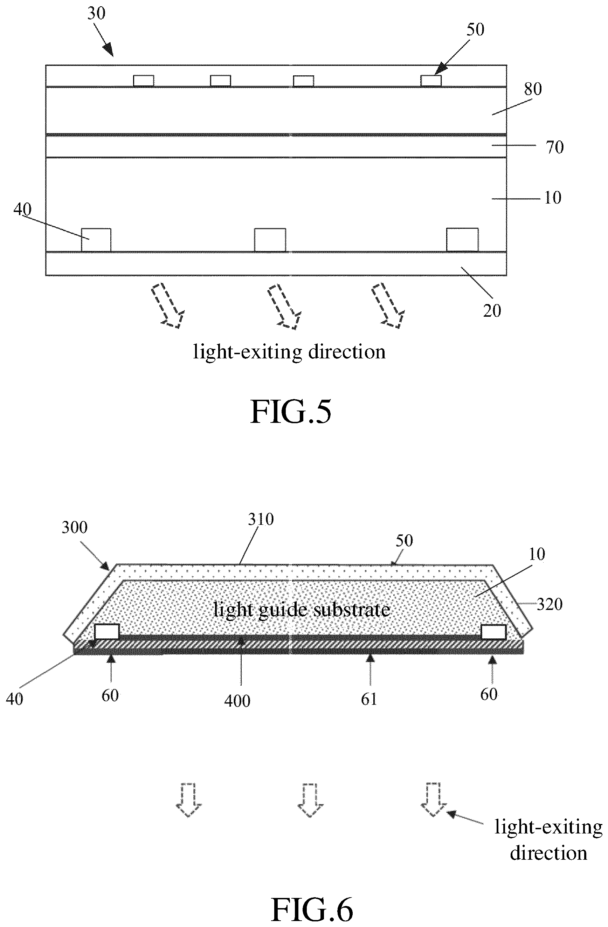

Fig. 5 is a structural diagram of an ultra-thin surface light source structure according to the embodiment 3 of the present invention.

As shown in Fig.5, the structure of this embodiment is basically the same as that of embodiment 1, while the difference is that the present invention discloses an ultra-thin surface light source structure, comprising a light guide substrate layer 10, a circuit film 20, a reflective film 30, a PVD (Physical vapour deposition) coated diaphragm 70 and a transparent substrate layer 80, wherein the circuit film 20 is printed on bottom of the light guide substrate layer 10, the PVD (Physical vapour deposition) coated diaphragm 70 is arranged on an upper part of the light guide substrate layer 10, the transparent substrate layer 80 is arranged on an upper part of the PVD (Physical vapour deposition) coated diaphragm 70, and the reflective film 30 is arranged on the transparent substrate layer 80. A plurality of LED light sources 40 are arranged at intervals in the light guide substrate layer 10, and a plurality of reflective dots 50 are arranged at intervals in the reflective film 30.

Preferably, in this embodiment, the reflective film 30 is preferably a silvery reflective film, and the reflective dots 50 are printed on a lower part or an upper part of the silvery reflective film 50 by screen printing.

Herein, a substrate of the silvery reflective film is preferably transparent PET, PC, etc., which makes the entire diaphragm be a metallic silver reflective film by printing silvery ink on the whole surface, and prints white, gold or texture by screen printing.

The PVD (Physical vapour deposition) coated diaphragm 70 is a semi-transparent and semi-reflective film achieved by PVD (Physical vapour deposition) process, and has decorative textures. Optical effects of 3D effects, multiple images, depth of field effects and complex texture patterns are formed through the light reflection between the silvery reflective film and the PVD coated diaphragm 70.

This embodiment integrates decorative functions by integrating other diaphragms while achieving the surface light source, and replaces the silvery reflective film and the PVD (Physical vapour deposition) coated diaphragm 70 to flexibly respond to different optical design needs and decorative needs.

Preferably, a substrate of the reflective film 30 is made by transparent PET or PC, which makes the entire diaphragm be a reflective film through printing white ink on whole surface. The reflective dots 50 are printed on a lower part or an upper part of the reflective film 30 by screen printing. By printing high-reflectivity dots through screen printing, the uniformity of brightness of the overall surface light source is further controlled, or specific brightness distribution requirements are further achieved.

LED light sources 40 on the circuit film 20 is preferably pre-soldered. The electronic circuit is achieved by printing conductive ink. There are metal pins reserved for electrical connection on the edge of the circuit film 20.

Optionally, one side of the circuit film 20 corresponds to process and function, and the other side is a light shield layer 60 printed by white ink. The light transmittance of the light shield layer 60 is controlled by the type of ink and the thickness of ink to optimize the bright region of the area near the LED light sources 40.

In this embodiment, preferably, LED light sources 40 can preferably be TOPLEDs (top-emitting LEDs), SIDELEDs (side-emitting LEDs), white LEDs with optionally specified colour coordinate range, monochromatic LEDs with optionally specified wavelength range or RGB LEDs (red, green and blue LED). Optionally, each LED unit is composed of a group of multiple LEDs. For example, three LEDs of red, green and blue may form a LED unit. For another example, a warm white LED and a cold white LED may also form a LED unit. Otherwise, any combination of two or more LEDs of orange light, red light, ice blue, green light and white light may also form a LED unit.

The light guide material in the light guide substrate layer 10 can be selected from PMMA (acrylic), PC (polycarbonate) or Silicone (silica gel). Among them, the surface light source achieved by PMMA (acrylic) and PC (polycarbonate) is hard, and the surface light source achieved by silica gel is soft.

Wherein, the PVD coated diaphragm 70 is a semi-transparent and semi-reflective film achieved by PVD (i.e. vacuum evaporation or magnetron sputtering) process, and has decorative textures. The ultra-thin surface light source structure forms optical effects of 3D effects, multiple images, depth of field effects and complex texture patterns through the light reflection between the silvery reflective film and the PVD coated diaphragm 70.

This embodiment integrates decorative functions by integrating other diaphragms while achieving the surface light source, and replaces the silvery reflective film and the PVD coated diaphragm to flexibly respond to different optical design needs and decorative needs.

### Embodiment 4:

Fig. 6 is a structural diagram of an ultra-thin surface light source structure according to the embodiment 4 of the present invention.

As shown in Fig.6, the structure of this embodiment is basically the same as that of embodiment 1, while the difference is that the present invention discloses an ultra-thin surface light source structure, comprising a light guide substrate layer 10, a circuit film 20 and an optical film 300, wherein the circuit film 20 is printed on bottom of the light guide substrate layer 10, the optical film 300 comprises an upper optical film 310 and a plurality of side optical films 320, the side optical films 320 are respectively arranged on both sides of the light guide substrate layer 10, and the upper optical film 310 is arranged on an upper part of the light guide substrate layer 10. A plurality of LED light sources 40 are arranged at intervals in the light guide substrate layer 10, and a plurality of reflective dots 50 or optical microstructures 110 are arranged at intervals in the upper optical film 310.

Preferably, the ultra-thin surface light source structure further comprises a plurality of light shield layers 60 and a decorative layer 61 with a translucent texture. The light shield layers 60 and the decorative layer 61 are arranged on bottom of the circuit film 20, and the light shield layers 60 are located on both sides of the decorative layer 61. Herein, the decorative layer 61 is directly pasted on the light source through a film-forming process, and the decorative layer 61 preferably has a lighting pattern, wherein the lighting pattern may adopt a specific pattern.

Further, the ultra-thin surface light source structure further comprises a silver nanowire 400. The silver nanowire 400 is arranged on bottom of the light guide substrate layer 10 and between two adjacent LED light sources 40.

The side surface of the ultra-thin surface light source is subject to high-reflection mirror surface treatment. The optical film 300 comprises a reflective dot 50 (or optical microstructure) surface and side reflective surfaces, and the side reflective surfaces are achieved by highly-reflective white or silvery ink, or achieved by PVD process.

The light emitted by the LED light sources 40 is reflected by a mirror surface and transmits through a light guide resin. The output light can achieve uniform or other types of brightness distribution with the help of an optical pattern on the optical film 300, which can well protect the infrared internal light guide and avoid the large absorption loss caused by the decorative layer 61.

Preferably, a complete optical film with an optical pattern and a PVD layer is comprised, which is covered on the light guide resin by TOM (three-dimensional overlay method).

Preferably, a substrate of the reflective film 30 is made by transparent PET or PC, which makes the entire diaphragm be a reflective film by printing white ink on the whole surface. The reflective dots 50 are printed on a lower part or an upper part of the reflective film 30 by screen printing. By printing high-reflectivity dots through screen printing, the uniformity of brightness of the overall surface light source is further controlled, or specific brightness distribution requirements are further achieved.

LED light sources 40 on the circuit film 20 is preferably pre-soldered. The electronic circuit is achieved by printing conductive ink. There are metal pins reserved for electrical connection on the edge of the circuit film 20.

Optionally, one side of the circuit film 20 corresponds to process and function, and the other side is the light shield layer 60 printed by white ink. The light transmittance of the light shield layer 60 is controlled by the type of ink and the thickness of ink to optimize the bright region of the area near the LED light sources 40.

In this embodiment, preferably, LED light sources 40 can preferably be TOPLEDs (top-emitting LEDs), SIDELEDs (side-emitting LEDs), white LEDs with optionally specified colour coordinate range, monochromatic LEDs with optionally specified wavelength range or RGB LEDs (red, green and blue LEDs). Optionally, each LED unit is composed of a group of multiple LEDs. For example, three LEDs of red, green and blue may form a LED unit. For another example, a warm white LED and a cold white LED may also form a LED unit. Otherwise, any combination of two or more LEDs of orange light, red light, ice blue, green light and white light may also form a LED unit.

The light guide material in the light guide substrate layer 10 can be selected from PMMA (acrylic), PC (polycarbonate) or Silicone (silica gel). Among them, the surface light source achieved by PMMA (acrylic) and PC (polycarbonate) is hard, and the surface light source achieved by silica gel is soft.

### Embodiment 5:

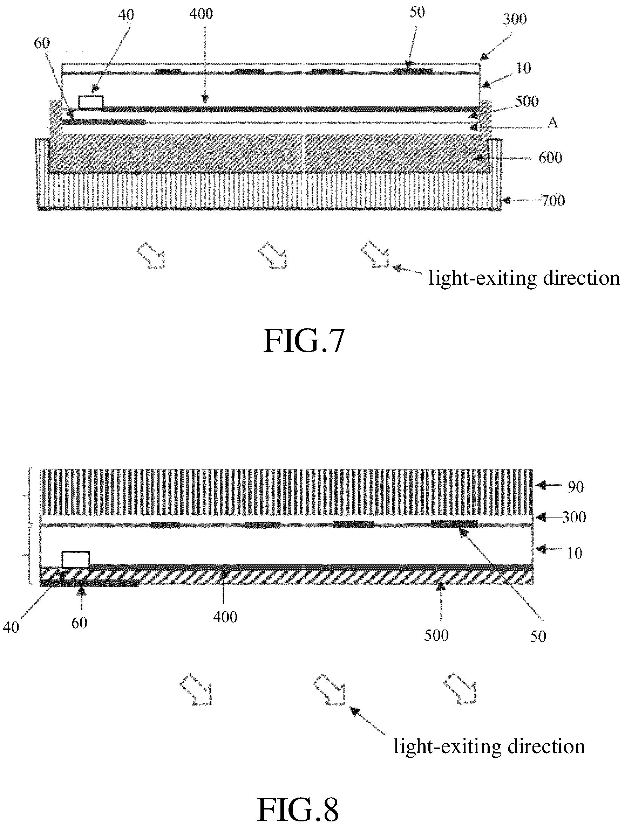

Fig. 7 is a structural diagram of an ultra-thin surface light source structure according to the embodiment 5 of the present invention.

As shown in Fig.7, the structure of this embodiment is basically the same as that of embodiment 1, while the difference is that the present invention discloses an ultra-thin surface light source structure, comprising a light guide substrate layer 10, an optical film 300, a substrate layer of PET or PC film 500, a LSR soft material layer 600 and a leather with a translucent texture 700, wherein the optical film 300 is printed on an upper part of the light guide substrate layer 10, the substrate layer of the PET or PC film 500 is arranged on bottom of the light guide substrate layer 10, the LSR (Liquid Silicone Rubber) soft material layer 600 is wrapped outside the substrate layer of the PET or PC film 500, a gap is left between the LSR (Liquid Silicone Rubber) soft material layer 600 and the substrate layer of the PET or PC film 500, and the leather 700 is wrapped outside the LSR soft material layer 600. At least one LED light source 40 is arranged in the light guide substrate layer 10, and a plurality of reflective dots 50 are arranged at intervals in the optical film 300.

Preferably, the ultra-thin surface light source structure further comprises a silver nanowire 400, and the silver nanowire 400 is arranged on bottom of the light guide substrate layer 10 and located on a side of the LED light source 40.

Further, the ultra-thin surface light source structure further comprises a light shield layer 60, and the light shield layer 60 is arranged on a bottom area of at least a portion of the substrate layer of the PET or PC film 500.

The ultra-thin light source in the ultra-thin surface light source structure is covered by a LSR (Liquid Silicone Rubber) assembly (i.e., LSR soft material layer) through a 2K injection moulding process or an over-moulding process. Herein, the LSR (Liquid Silicone Rubber) assembly is made of transparent material. The LSR (Liquid Silicone Rubber) soft material layer 600 provides a soft touch to the system, and a leather is packaged or directly packaged on the LSR (Liquid Silicone Rubber) soft material layer 600. Herein, the leather 700 has a lighting pattern, and the lighting pattern is specified by a trans-pattern with opaque property.

In addition, the leather 700 has uniform light transmission on the entire surface, while the lighting pattern is achieved by overlaying a decorative layer directly on the light source.

Preferably, a substrate of the reflective film 30 is made by transparent PET or PC, which makes the entire diaphragm be a reflective film by printing with white ink on the whole surface. The reflective dots 50 are printed on a lower part or an upper part of the reflective film 30 by screen printing. By printing high-reflectivity dots through screen printing, the uniformity of brightness of the overall surface light source is further controlled, or specific brightness distribution requirements are further achieved.

LED light sources 40 on the circuit film 20 is preferably pre-soldered. The electronic circuit is achieved by printing conductive ink. There are metal pins reserved for electrical connection on the edge of the circuit film 20.

Optionally, one side of the circuit film 20 corresponds to process and function, and the other side is the light shield layer 60 printed by white ink. The light transmittance of the light shield layer 60 is controlled by the type of ink and the thickness of ink to optimize the bright region of the area near the LED light sources 40.

In this embodiment, preferably, LED light sources 40 can preferably be TOPLEDs (top-emitting LEDs), SIDELEDs (side-emitting LEDs), white LEDs with optionally specified colour coordinate range, monochromatic LEDs with optionally specified wavelength range, or RGB LEDs (red, green and blue LEDs). Optionally, each LED unit is composed of a group of multiple LEDs. For example, three LEDs of red, green and blue may form a LED unit. For another example, a warm white LED and a cold white LED may also form a LED unit. Otherwise, any combination of two or more LEDs of orange light, red light, ice blue, green light and white light may also form a LED unit.

The light guide material in the light guide substrate layer 10 can be selected from PMMA (acrylic), PC (polycarbonate), or Silicone (silica gel). Among them, the surface light source achieved by PMMA (acrylic) and PC (polycarbonate) is hard, and the surface light source achieved by silica gel is soft.

### Embodiment 6:

Fig. 8 is a structural diagram of an ultra-thin surface light source structure according to the embodiment 6 of the present invention.

As shown in Fig.8, the structure of this embodiment is basically the same as that of embodiment 1, while the difference is that the present invention discloses an ultra-thin surface light source structure, comprising a light guide substrate layer 10, a substrate layer of PET or PC film 500 and an optical film 300, wherein the substrate layer of the PET or PC film 500 is arranged on bottom of the light guide substrate layer 10, the optical film 300 is printed on an upper part of the light guide substrate layer 10, at least one LED light source 40 is arranged in the light guide substrate layer 10, and a plurality of reflective dots 50 are arranged at intervals in the optical film 300.

Preferably, the ultra-thin surface light source structure further comprises a light shield layer 60 and a silver nanowire 400. The light shield layer 60 is arranged on a bottom area of at least a portion of the substrate layer of the PET or PC film 500. The silver nanowire 400 is arranged on bottom of the light guide substrate layer 10 and located between two adjacent LED light sources 40.

Furthermore, the ultra-thin surface light source structure further comprises a white bracket 90, and the white bracket 90 is arranged on an upper part of the optical film 300.

An ultra-thin surface light source structure described in this embodiment, based on the above application embodiments of ultra-thin light sources, uses a 2K injection moulding process to integrate a carrier of white reflective PC or PC/ABS material with the light source.

The ultra-thin surface light source structure described in this embodiment adopts two-colour injection moulding. The first injection of the two-colour injection moulding integrates the light guide substrate layer 10 and the substrate layer of PET or PC film 500 into one, and the second injection of the two-colour injection moulding integrates the optical film 300 and the white bracket 90 into one. Then, the whole is put into a mould for co-injection.

In this embodiment, preferably, LED light sources 40 can preferably be TOPLEDs (top-emitting LEDs), SIDELEDs (side-emitting LEDs), white LEDs with optionally specified colour coordinate range, monochromatic LEDs with optionally specified wavelength range, or RGB LEDs (red, green and blue LEDs). Optionally, each LED unit is composed of a group of multiple LEDs. For example, three LEDs of red, green and blue may form a LED unit. For another example, a warm white LED and a cold white LED may also form a LED unit. Otherwise, any combination of two or more LEDs of orange light, red light, ice blue, green light and white light may also form a LED unit.

The light guide material in the light guide substrate layer 10 can be selected from PMMA (acrylic), PC (polycarbonate) or Silicone (silica gel). Among them, the surface light source achieved by PMMA (acrylic) and PC (polycarbonate) is hard, and the surface light source achieved by silica gel is soft.

According to above structural descriptions from Embodiment 1 to Embodiment 6, the present invention also discloses an automobile interior, which comprises the above-mentioned ultra-thin surface light source structure.

The ultra-thin surface light source structure of the present invention has the following characteristics.
1. Using a one-piece, highly integrated surface light source, that is, injection-moulding a circuit film, a light guide material, a reflective film and other decorative films through an integrated mould.
2. Mould injection production process based on in-moulding electronics (IME).
3. The upper and lower surfaces of a light guide material are respectively a reflective film and a circuit film.
4. The circuit film is a diaphragm with electronic circuit and soldered with LED light source.
5. The reflective film has an optical pattern, which is integrated by one-layer diaphragm with in-mould injection. The optical pattern thereof can be two-dimensional ink-printed reflective dots or three-dimensional microstructure dots.
6. The basic form of the ultra-thin surface light source structure adopts monochrome injection moulding or two-colour injection moulding.
7. The independent control circuit board is electrically connected with the surface light source through flexible connection wires, and the control circuit board is responsible for achieving a dynamic control of the lighting sequence, light and shade, and light colour of the LED light sources, meanwhile, a voltage stabilization function is also comprised.

In the ultra-thin surface light source structure of the present invention, the height from the LED light sources to the light-transmitting surface is less than or equal to 5 mm, which has a standardized mould and can meet flexible designs and application requirements. The ultra-thin surface light source structure only needs to replace the micro-optical film according to different light guide requirements. The hard wrap or soft wrap depends on the type of light guide resin material. Among them, the integration of decorative film and lighting part is feasible for decorative panel lighting or skin lighting where mechanical space is very limited.

In conclusion, an ultra-thin surface light source structure of the present invention and the automotive interior comprising it have the following many advantages.
1. The ultra-thin surface light source structure has no separate LED circuit board parts, light guide parts, reflective brackets or reflective films, etc., which greatly saves manufacturing cost of components, assemblies and assembly production process.
2. The ultra-thin surface light source is produced by mould injection to complete production of a standard surface light source, and can be cut according to a required shape. At the same time, a certain degree of bending is allowed, that is, using standardized products adapt to flexible designs and assembly requirements.
3. The mould of the ultra-thin surface light source is a standardized mould. For different applications, it just needs to replace reflective films (optical pattern films) for in-film injection moulding to produce a surface light source assembly for a certain application.

Although specific embodiments of the present invention have been described above, those skilled in the art should understand that these are merely illustrative embodiments, and the scope of the present invention is defined by the appended claims.

## Claims

1. An ultra-thin surface light source structure, which comprises a light guide substrate layer (10), a circuit film (20) printed on bottom of the light guide substrate layer (10), a reflective film (30), and a plurality of LED light sources (40) arranged at intervals in the light guide substrate layer (10), **characterized by** said reflective film (30) being printed on an upper part of the light guide substrate layer and a plurality of reflective dots (50) arranged at intervals in the reflective film (30).

2. The ultra-thin surface light source structure according to claim 1, which is **characterized in that** the ultra-thin surface light source structure further comprises a light shield layer (60), and the light shield layer (60) is printed on bottom of the circuit film (20).

3. The ultra-thin surface light source structure according to claim 1 or 2, which is **characterized in that** a substrate of the reflective film (30) is made by transparent thermoplastic polyester, PET, or polycarbonate, PC, and the reflective film (30) is printed with white ink on whole surface, in particular **in that** the reflective dots (50) are printed on a lower part or an upper part of the reflective film (30) by screen printing.

## Patentansprüche

1. Ultradünne Oberflächenlichtquellenstruktur, die eine Lichtleiterträgerschicht (10), eine auf der Unterseite der Lichtleiterträgerschicht (10) gedruckte Schaltungsfolie (20), eine reflektierende Folie (30), und eine Vielzahl von LED-Lichtquellen (40), die beabstandet in der Lichtleiterträgerschicht (10) angeordnet sind, umfasst, **dadurch gekennzeichnet, dass** die reflektierende Folie (30) auf einen oberen Teil der Lichtleiterträgerschicht aufgedruckt ist und eine Vielzahl von reflektierenden Punkten (50) beabstandet in der Reflexfolie (30) angeordnet ist.

2. Ultradünne Oberflächenlichtquellenstruktur gemäß Anspruch 1,
**dadurch gekennzeichnet, dass** die ultradünne Oberflächenlichtquellenstruktur ferner eine Lichtabschirmschicht (60) umfasst und die Lichtabschirmschicht (60) auf die Unterseite der Schaltungsfolie (20) gedruckt ist.

3. Ultradünne Oberflächenlichtquellenstruktur gemäß Anspruch 1 oder 2, **dadurch gekennzeichnet, dass** ein Substrat der reflektierenden Folie (30) aus transparentem thermoplastischem Polyester, PET oder Polycarbonat, PC, gefertigt ist und die reflektierende Folie (30) auf ihrer gesamten Oberfläche mit weißer Tinte bedruckt ist, insbesondere dadurch, dass die reflektierenden Punkte (50) durch Siebdruck auf einen unteren Teil oder einen oberen Teil der reflektierenden Folie (30) gedruckt sind.

## Revendications

1. Structure de source de lumière de surface ultra-mince, qui comprend une couche de substrat de guide de lumière (10), un film de circuit (20) imprimé sur le fond de la couche de substrat de guide de lumière (10), un film réfléchissant (30) et une pluralité de sources de lumière à DEL (40) agencées à des intervalles dans la couche de substrat de guide de lumière (10), **caractérisée en ce que** ledit film réfléchissant (30) est imprimé sur une partie supérieure de la couche de substrat de guide de lumière et une pluralité de points réfléchissants (50) agencés à des intervalles dans le film réfléchissant (30).

2. Structure de source de lumière de surface ultra-mince selon la revendication 1, qui est **caractérisée en ce que** la structure de source de lumière de surface ultra-mince comprend en outre une couche de protection contre la lumière (60), et la couche de protection contre la lumière (60) est imprimée sur le fond du film de circuit (20).

3. Structure de source de lumière de surface ultra-mince selon la revendication 1 ou 2, qui est **caractérisée en ce qu'**un substrat du film réfléchissant (30) est réalisé en polyester thermoplastique transparent, PET, ou polycarbonate, PC, et le film réfléchissant (30) est imprimé avec de l'encre blanche sur toute la surface, en particulier **en ce que** les points réfléchissants (50) sont imprimés sur une partie inférieure ou une partie supérieure du film réfléchissant (30) par sérigraphie.
